Europäisches Patentamt

(19) European Patent Office

Office européen des brevets

(11) Publication number: **0 022 256**
**B1**

(12) **EUROPEAN PATENT SPECIFICATION**

(45) Date of publication of patent specification: **13.06.84**

(51) Int. Cl.³: **B 05 D 5/06, B 05 D 5/08, A 47 J 36/02**

(21) Application number: **80103807.6**

(22) Date of filing: **04.07.80**

(54) Coated cookware with FEP topcoat.

(30) Priority: **06.07.79 US 55479**

(43) Date of publication of application:
**14.01.81 Bulletin 81/2**

(45) Publication of the grant of the patent:
**13.06.84 Bulletin 84/24**

(84) Designated Contracting States:
**BE DE FR GB IT NL**

(56) References cited:
**US - A - 4 011 361**
**US - A - 4 064 303**
**US - A - 4 118 537**
**US - A - 4 177 320**
**US - A - 4 180 609**

(73) Proprietor: **E.I. DU PONT DE NEMOURS AND COMPANY**
**Legal Department 1007 Market Street**
**Wilmington Delaware 19898 (US)**

(72) Inventor: **Vassiliou, Eustathios**
**12 S. Townview Lane Woodmere**
**Newark Delaware 19711 (US)**

(74) Representative: **Abitz, Walter, Dr.-Ing. et al,**
**Abitz, Morf, Gritschneder P.O. Box 86 01 09**
**D-8000 München 86 (DE)**

Courier Press, Leamington Spa, England.

## Description

### Background of the invention

This invention relates to coated cookware having a heat-stable multi-layer nonstick coating.

Superior performance in cookware coatings is obtained using multi-layer coatings in which the topcoat contains polytetrafluoroethylene(PTFE) along with a heat-decomposable auxiliary polymer, such as an acrylic polymer, which aids in coalescing the PTFE into a less-porous coating at lower temperatures than would be feasible without the auxiliary polymer.

It is desirable to be able to form cookware coatings which are less porous without the need for heat-decomposable auxiliary polymers.

### Summary of the invention

The present invention provides a cookware article comprising a substrate coated with a heat-stable coating system having at least two layers including

a primer layer comprising a heat-stable polymer and a liquid carrier in direct contact with the substrate and

a topcoat layer consisting of FEP in the absence of heat-decomposable auxiliary polymers to act as a coalescing aid.

### Detailed description of the invention

It has been found that a copolymer of tetrafluoroethylene and hexafluoropropylene, preferably about 85% tetrafluoroethylene and 15% hexafluoropropylene (FEP), can be used as the heat-stable polymer in the topcoat of a cookware coating system having two or more layers. The FEP can be coalesced at relatively low temperatures without the need for heat-decomposable auxiliary polymers to act as a coalescing aid.

The present invention draws on technology expressed in other U.S. Patents, including

4,123,401—Berghmans and Vary (October 31, 1978) directed to coating compositions containing fluoropolymer, mica, decomposable polymer, and a liquid carrier, particularly suited for use as topcoats;

4,049,863—Vassiliou (1977) directed to primers containing fluoropolymer, colloidal silica, the salt of a polyamic acid, and a coalescing agent, mica, and a liquid carrier;

4,087,394—Concannon (May 2, 1978) directed to aqueous coating compositions of fluorocarbons and a second film-forming material which can be the salt of a polyamic acid;

4,143,204—Fang (March 6, 1979) directed to coated articles in which the coating comprises a copolymer of tetrafluoroethylene and hexafluoropropylene along with an auxiliary film-forming material; and the following five patents which are concerned with heat-stable coatings containing oxidation catalysts and/or antioxidants:

4,054,704—Vassiliou (1977),

4,054,705—Vassiliou (1977),

4,064,303—Vassiliou (1977),

4,120,608—Vassiliou (October 17, 1978), and

4,122,226—Vassiliou (October 24, 1978); and

4,180,609—Vassiliou (December 25, 1979)

is directed to coated articles having a multi-layer coating with fluorocarbon and mica in a basecoat and a topcoat, and with a defined relationship between the concentration of mica in the basecoat and that in the topcoat.

Preferably by using techniques of the above-identified patents and the application, cookware is coated with a primer layer and a topcoat layer (optionally with an intermediate layer between these two layers) which have the defined relationships to obtain the advantages of the invention.

The following example teaches a preferred embodiment of the invention. Parts, percentages, and proportions herein are by weight except where indicated otherwise.

Coated articles of the invention were prepared by gritblasting an aluminum substrate and spraying on a primer coating composition in accordance with the techniques of Example I of U.S. Patent 4,049,863 and air-drying it, then spraying on a topcoat coating composition in accordance with the techniques of Example 4 of U.S. Patent 4,123,401 and Example 1 of 4,180,609, but using FEP instead of PTFE, and drying the coated substrate at 345°C for 10 minutes. The compositions used were those indicated in the tables below. Satisfactory coatings were obtained without the need for an auxiliary decomposable polymer.

0 022 256

## TABLE I
### Primer coating composition

| | % |
|---|---|
| Afflair® pigment—TiO$_2$ coated mica | .070 |
| Red iron oxide pigment | .504 |
| Brown pigment (mixed iron, aluminum, and titanium oxides) | .211 |
| Cobalt blue pigment (cobalt and aluminum oxide) | 5.031 |
| Teflon® 120 (Du Pont) FEP suspensoid stabilized in water by Triton® X-100 at 55% solids | 19.839 |
| Ludox® AM colloidal silica (Du Pont) (solids) | 4.005 |
| Sodium polynaphthalene sulfonate | .006 |
| Amide-imide resin solids (polyamide acid of Example 1A of U.S. Patent 4,049,863) | 3.481 |
| Deionized water | 59.263 |
| Octyl phenol polyether alcohol | 1.894 |
| Diethylamine | .464 |
| Triethylamine | .928 |
| Furfuryl alcohol | 2.562 |
| Methyl pyrrolidone | 1.740 |
| | 100.000 |

## TABLE II
### Topcoat coating composition

| | | Parts |
|---|---|---|
| FEP Fluorocarbon resin | | 838.08 |
| Deionized water | | 117.34 |
| Solvent surfactant | | 117.34 |
|     [butyl carbitol | 15.56 | |
|     triethanolamine | 25.83 | |
|     toluene | 46.39 | |
|     oleic acid | 12.22 | |
| | 100.00] | |
| Afflair® pigment | | 12.10 |
| Channel black—clay aqueous mill base | | 1.78 |
| White TiO$_2$ aqueous mill base | | 3.36 |
| | | 1090.00 |

## Claims

1. A cookware article comprising a substrate coated with a heat-stable coating system having at least two layers including

— a primer layer comprising a heat-stable polymer and a liquid carrier in direct contact with the substrate and
— a topcoat layer consisting of FEP in the absence of heat-decomposable auxiliary polymers to act as a coalescing aid.

2. The article of claim 1 in which the heat-stable polymer of the primer layer is a silicone, polysulfide, polymerized parahydroxybenzoic acid, a polysulfone, a polyimide, a polyamide, a salt of a polyamic acid, a polysulfonate, a polysulfonamide, a fluorocarbon polymer, or a mixture of two or more of the above.

3. The article of claim 1 in which the coating system also includes an intermediate layer between the primer layer and the topcoat layer, said intermediate layer comprising a polymer stable at temperatures above 300°C.

4. The process of coating cookware by coating the substrate with a primer layer comprising a heat-stable polymer and a liquid carrier in direct contact with the substrate and applying a topcoat consisting of FEP as fluorocarbon polymer in the absence of heat-decomposable auxiliary polymers to act as a coalescing aid.

3

## Patentansprüche

1. Küchengerät, bei dem ein Substrat mit einem wärmebeständigen Überzugssystem beschichtet ist, das mindestens zwei Schichten aufweist, einschliesslich

— einer Grundschicht aus einem wärmebeständigen Polymeren und einem flüssigen Träger in direktem Kontakt mit dem Substrat, und
— einer Deckschicht aus FEP in Abwesenheit von wärmezersetzbaren Hilfspolymeren, die als Koaleszierhilfe wirken.

2. Gerät nach Anspruch 1, bei dem das wärmebeständige Polymere der Grundschicht ein Silikon, Polysulfid, polymerisierte p-Hydroxybenzoesäure, ein Polysulfon, ein Polyimid, ein Polyamid, ein Salz einer Polyamidsäure, ein Polysulfonat, ein Polysulfonamid, ein Fluorkohlenpolymeres oder ein Gemisch von zwei oder mehr dieser Stoffe ist.

3. Gerät nach Anspruch 1, bei dem das Überzugssystem auch eine Zwischenschicht zwischen der Grundschicht und der Deckschicht einschliesst, die ein Polymeres enthält, das bei Temperaturen oberhalb 300°C beständig ist.

4. Verfahren zum Überziehen von Küchengeräten durch Beschichten des Substrates mit einer Grundschicht, die ein wärmebeständiges Polymeres und einen flüssigen Träger in direktem Kontakt mit dem Substrat enthält, und Aufbringen einer Deckschicht, die aus FEP als Fluorkohlenstoffpolymerem in Abwesenheit wärmezersetzbarer Hilfspolymerer, die als Koaleszierhilfe wirken, besteht.

## Revendications

1. Un article de cuisson comprenant un substrat revêtu d'un système de revêtement stable à la chaleur ayant au moins deux couches comprenant

— une couche de fond comprenant un polymère stable à la chaleur et un véhicule liquide en contact direct avec le substrat, et
— une couche extérieure constituée de FEP et dépourvue de polymères auxiliaires décomposable par la chaleur pour servir d'adjuvant de coalescence.

2. L'article de la revendication 1 dans lequel le polymère stable à la chaleur de la couche de fond est une silicone, un polysulfure, de l'acide parahydroxybenzoïque polymérisé, une polysulfone, un polyimide, un polyamide, un sel d'acide polyamique, un polysulfonate, un polysulfonamide, un polymère de fluorocarbure, ou un mélange de deux ou plus des matières ci-dessus.

3. L'article de la revendication 1 dans lequel le système de revêtement comprend aussi une couche intermédiaire entre la couche de fond et la couche extérieure, cette couche intermédiaire comprenant un polymère stable à des températures de plus de 300°C.

4. Un procédé de revêtement d'articles de cuisson en revêtant un substrat d'une couche de fond comprenant un polymère stable à la chaleur et un véhicule liquide en contact direct avec le substrat, et en appliquant une couche extérieure consistant en FEP comme polymère de fluorocarbure en l'absence de polymères auxiliaires décomposables par la chaleur pour servir d'adjuvant de coalescence.